(19) Europäisches Patentamt
European Patent Office
Office européen des brevets

(11) **EP 4 059 638 A1**

(12) **EUROPEAN PATENT APPLICATION**


(43) Date of publication:
**21.09.2022 Bulletin 2022/38**

(21) Application number: **22163032.0**

(22) Date of filing: **18.03.2022**

(51) International Patent Classification (IPC):
***B22F 10/25*** *(2021.01)* ***B33Y 70/00*** *(2020.01)*
***C22C 33/02*** *(2006.01)* ***C22C 38/02*** *(2006.01)*
***C22C 38/04*** *(2006.01)* ***C22C 38/22*** *(2006.01)*
***C22C 38/24*** *(2006.01)* ***C22C 38/34*** *(2006.01)*
***C22C 38/40*** *(2006.01)* ***C22C 38/44*** *(2006.01)*

(52) Cooperative Patent Classification (CPC):
**C22C 38/40; B22F 10/25; B33Y 70/00; C22C 33/02; C22C 33/0207; C22C 38/02; C22C 38/04; C22C 38/22; C22C 38/24; C22C 38/34; C22C 38/44**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2021 JP 2021045453**



(71) Applicant: **Daido Steel Co., Ltd.**
**Nagoya-shi**
**Aichi 461-8581 (JP)**

(72) Inventors:
- **YOSHIMOTO, Takashi**
  **Aichi, 457-8545 (JP)**
- **KOYAMA, Tomonori**
  **Aichi, 457-8545 (JP)**
- **INOUE, Koichiro**
  **Aichi, 457-8545 (JP)**

(74) Representative: **Diehl & Partner**
**Patent- und Rechtsanwaltskanzlei mbB**
**Erika-Mann-Straße 9**
**80636 München (DE)**


(54) **FE-BASED ALLOY AND METAL POWDER**


(57) The present invention relates to an Fe-based alloy having a composition including 0.5 mass% ≤ C ≤ 0.9 mass%, 0.5 mass% ≤ Si ≤ 3.0 mass%, 0.1 mass% ≤ Mn ≤ 1.0 mass%, 3.0 mass% ≤ Cr ≤8.0 mass%, and 0.1 mass% ≤ Mo ≤4.0 mass%, with the balance being Fe and unavoidable impurities, and satisfying the following expression (1) when [M] represents a content of an element M expressed in mass% basis, -3.0 < [Si] - (5[C] + 2[Mn]) < -0.5 (1).


*FIG. 1*

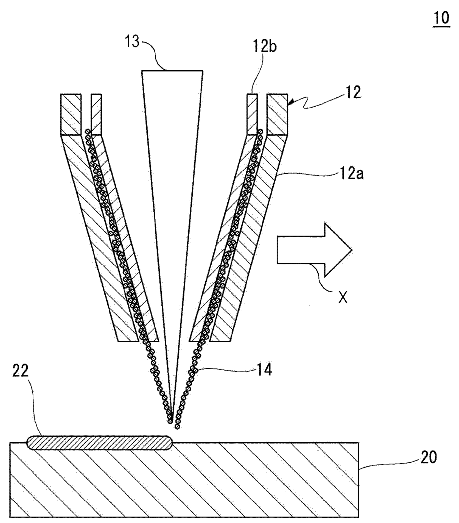


EP 4 059 638 A1

## Description

TECHNICAL FIELD

The present invention relates to an Fe-based alloy and a metal powder. In more detail, the present invention relates to an Fe-based alloy which, when applied to weld overlay by additive manufacturing, attains a hardness (about 650 HV or higher) comparable to those of die steels for cold working, and further relates to a metal powder equivalent in average composition to the Fe-based alloy.

BACKGROUND

Molds for cold working, such as the cold press working of steel plates, and various members required to have wear resistance (hereinafter these are often inclusively referred to simply as "wear-resistant members") are required to be high in hardness, especially in the hardness of the surface portions, for wear resistance. Hitherto, die steels for cold working and high-speed tool steels represented by JIS-SKD11 (JIS G 4404:2015) and JIS-SKH51 (JIS G 4403:2015) have been used for those wear-resistant members. However, in the case of using a method in which a wear-resistant member is produced by machining from the die steel for cold working or the high-speed tool steel, the tools are severely damaged because the material being worked is a high-hardness steel material, resulting in a high working cost.

Meanwhile, a method is also employed in which a wear-resistant member is produced by depositing a high-hardness metal by overlay welding on a surface of an inexpensive base. Use of this method can reduce the cost of materials for wear-resistant members and the cost of working. Furthermore, overlay welding in which a plasma or the like is used as a heat source is also used for repairing molds which have worn or chipped.

However, the conventional overlay welding has the following three problems. (1) The base metal is considerably affected by heat and the heat-affected zone of the base material softens. (2) In the case of depositing a die steel or a high-speed steel by overlay welding, the overlay portion has an increased retained-austenite content and has an insufficient hardness. (3) In the case where a steel containing C, Mo, W, and V in large amounts is deposited by overlay welding, a fracture is prone to occur from carbides which have precipitated at grain boundaries, resulting in a decrease in toughness.

Those problems can be mitigated by a heat treatment performed after the overlay welding. However, there are cases where the heat treatment increases the repair cost or is causative of a decrease in the mechanical properties of the base metal.

In recent years, a technique of additive manufacturing in a direct energy deposition (DED) mode, in which a powder or a wire is melted by a laser and deposited, has progressed and this has made it possible to conduct weld overlay which attains finer crystal grains and less exerts a heat effect on the base metal than a tungsten inert gas welding (TIG) or a plasma powder welding (PPW). The problem of softening in the heat-affected zone is hence being overcome. However, the problems concerning the insufficient hardness due to retained austenite and the decrease in toughness due to carbides precipitated at grain boundaries remain unsolved.

In order to overcome these problems, various proposals have been made hitherto.

For example, Patent Document 1 discloses an overlay-welding alloy for hardening including 0.65 mass% to 1.1 mass% of C, 4.5 mass% to 10.5 mass% of Cr, and 0.05 mass% to 1.0 mass% of Mo, with the balance being Fe and impurities.

Patent Document 1 states that use of this hardening overlay-welding alloy gives a weld metal which in the as-welded state has a hardness of about 48 HRC to 52 HRC.

Patent Document 2 discloses a surface hardened member, which includes a hardened surface layer constituted of a weld metal including 0.2 mass% to 0.9 mass% of C, 0.6 mass% to 1.9 mass% of Si, 0.6 mass% to 1.6 mass% of Mn, 2.5 mass% to 7.5 mass% of Cr, 0.1 mass% or more and less than 1.5 mass% of W, 0.1 mass% or more and less than 1.5 mass% of V, 1.0 mass% to 8.0 mass% of Mo, and more than 0.2 mass% and 0.8 mass% or less of B, with the balance being Fe and unavoidable impurities.

Patent Document 2 states that (A) in the case where the formation of carbides is inhibited in order to increase crack resistance, the weld metal has a reduced hardness and reduced wear resistance and that (B) in the case where the contents of Mo and B in a weld metal are appropriately regulated so that the weld metal has a metallographic structure which is a composite structure including martensitic steel and a boride, then the weld metal has an increased hardness and simultaneously has a refined metallographic structure and improved crack resistance.

As stated in Patent Documents 1 and 2, the problems concerning the insufficient hardness due to retained austenite and the decrease in toughness due to carbides precipitated at grain boundaries can be overcome to some degree by regulating the addition amounts of alloying elements. However, in a method in which weld overlay is repeatedly conducted in the same portion, as in DED-mode additive manufacturing, there is a problem in that the overlay layer is tempered (softened) by the repetitions of weld overlay.

In DED-mode additive manufacturing, the overlay layer repeatedly undergoes heat input so that even portions separated from the weld pool are held at temperatures of from room temperature to 400□. At this time, the martensitic structure is tempered to come to have a lower hardness than the structure in the as-rapidly-cooled-solidified state. Because of this, if the low-temperature tempering of the martensite has not been taken into account in regulating the amounts of the alloying elements, the hardness of the martensite after completion of the shaping becomes insufficient, making it impossible to obtain sufficient wear resistance.

Patent Document 1: JP-T-2004-503386 (The term "JP-T" as used herein means a published Japanese translation of a PCT patent application.)
Patent Document 2: Japanese Patent No. 3462742

SUMMARY

An object of the present invention is to provide an Fe-based alloy which, when used in melting-solidification shaping, e.g., overlay welding or additive manufacturing, can give an overlay layer, additive manufacturing article, or the like which has high wear resistance and high toughness. Another object is to provide a metal powder having an average composition that is equivalent to the Fe-based alloy.

An Fe-based alloy and metal powder of the present invention in order to solve the above-mentioned problems relate to the following configurations (1) to (7):

(1) An Fe-based alloy having a composition including:

0.5 mass% ≤ C ≤ 0.9 mass%;
0.5 mass% ≤ Si ≤ 3.0 mass%;
0.1 mass% ≤ Mn ≤ 1.0 mass%;
3.0 mass% ≤ Cr ≤ 8.0 mass%; and
0.1 mass% ≤ Mo ≤ 4.0 mass%,

with the balance being Fe and unavoidable impurities,
and satisfying the following expression (1) when [M] represents a content of an element M expressed in mass% basis,

$$-3.0 < [Si] - (5[C] + 2[Mn]) < -0.5 \qquad (1).$$

(2) The Fe-based alloy according to (1), in which the composition further includes at least one selected from the group consisting of 0. 1 mass% ≤ V ≤ 1.0 mass% and 0.1 mass% ≤ W ≤ 4.0 mass%.
(3) The Fe-based alloy according to (1) or (2), in which the composition further includes 0.001 mass% ≤ S ≤ 0.100 mass%.
(4) The Fe-based alloy according to any one of (1) to (3), in which the composition further includes 0.01 mass% ≤ Ni ≤ 3.0 mass%.
(5) The Fe-based alloy according to any one of (2) to (4), in which the composition further satisfies the following expression (2) when [M] represents a content of an element M expressed in mass% basis,

$$0.033[Mo] + 0.063[W] + 0.2V \leq 0.4 \qquad (2).$$

(6) A metal powder having an average composition that is equivalent to the Fe-based alloy according to any one of (1) to (5).
(7) The metal powder according to (6), which gives an additive manufacturing article having a Vickers hardness of 650 HV or higher.

The Fe-based alloy according to the present invention has optimized contents of alloying elements, in particular, Si, C, and Mn, and hence gives overlay layer having relatively low content of retained austenite. In addition, the contents of elements which cause secondary hardening, such as Mo and V, therein have been optimized, and it is hence possible to inhibit the decrease in toughness due to the precipitation of coarse carbides. Furthermore, the Fe-based alloy has an optimized Si content and hence is highly resistant to temper softening. Consequently, the Fe-based alloy according to the present invention, when applied to melting-solidification shaping, can give an overlay layer or additive manufacturing article which has high wear resistance and high toughness.

BRIEF DESCRIPTION OF DRAWINGS

FIG. 1 is a schematic view of a 3D metal printer.
FIG. 2 is a diagram showing a relationship between [Si] - (5[C] + 2[Mn]) and the volume percentage of retained austenite.
FIG. 3 is a diagram showing a relationship between [Si] - (5[C] + 2[Mn]) and the hardness of overlay layer.

EMBODIMENTS

Embodiments of the present invention are described in detail below.

1. Fe-based Alloy

1.1. Components

The Fe-based alloy according to the present invention contains the following elements, with the balance being Fe and unavoidable impurities. The kinds of the additive elements, ranges of the contents of the components, and reasons for the content ranges are as follows.

1.1.1. Main Constituent Elements (Essential Components)

(1) 0.5 mass% ≤ C ≤ 0.9 mass%:

C is an element necessary for increasing the hardness of the martensitic structure. In the case where the content of C is too low, the amount of solid-solution C in the martensite is insufficient, resulting in a shaped article having an insufficient hardness. Consequently, the content of C needs to be 0.5 mass% or higher. The content of C is preferably 0.52 mass% or higher.
Meanwhile, in the case where the content of C is too high, the martensitic-transformation initiation temperature declines. As a result, the shaped article has an increased volume percentage of retained austenite and has an insufficient hardness. Consequently, the content of C needs to be 0.9 mass% or less. The content of C is preferably 0.7 mass% or less, more preferably 0.65 mass% or less, and still more preferably 0.61 mass% or less.

(2) 0.5 mass% ≤ Si ≤ 3.0 mass%:

Si is an element necessary for increasing the resistance to temper softening at temperatures up to 400□. Si is also an element which enhances the machinability. In the case where the content of Si is too low, the shaped article has been considerably softened by a heat effect and has an insufficient hardness. In addition, the shaped article has considerably impaired machinability. Consequently, the content of Si needs to be 0.5 mass% or higher. The content of Si is preferably 0.75 mass% or higher, more preferably 1.5 mass% or higher, and still more preferably 1.7 mass% or higher.
Meanwhile, in the case where the content of Si is too high, some of the Si forms a solid solution in the martensite, resulting in considerably reduced toughness. Consequently, the content of Si needs to be 3.0 mass% or less. The content of Si is preferably 2.5 mass% or less, and more preferably 2.25 mass% or less.

(3) 0.1 mass% ≤ Mn ≤ 1.0 mass%:

Mn is an element which serves to improve the quench hardenability. Too low contents of Mn may result in the case where the alloy has insufficient quench hardenability and does not come to have a martensitic structure. Consequently, the content of Mn needs to be 0.1 mass% or higher. The content of Mn is preferably 0.2 mass% or higher, and more preferably 0.3 mass% or higher.

Meanwhile, in the case where the content of Mn is too high, the shaped article has an increased volume percentage of retained austenite and has an insufficient hardness. Consequently, the content of Mn needs to be 1.0 mass% or less. The content of Mn is preferably 0.6 mass% or less.

(4) 3.0 mass% ≤ Cr ≤ 8.0 mass%:

Cr is an element which serves to enhance the quench hardenability and corrosion resistance. In the case where the content of Cr is too low, the alloy has insufficient quench hardenability and considerably impaired corrosion resistance. Consequently, the content of Cr needs to be 3.0 mass% or higher. The content of Cr is preferably 4.0 mass% or higher, and more preferably 5.0 mass% or higher.
Meanwhile, in the case where the content of Cr is too high, not only the effect on quench hardenability is not enhanced any more but also an increased retained-austenite content results. Consequently, the content of Cr needs to be 8.0 mass% or less. The content of Cr is preferably 7.0 mass% or less.

(5) 0.1 mass% ≤ Mo ≤ 4.0 mass%:

Mo is an element which serves to improve the quench hardenability and enhance the resistance to temper softening. Mo is also an element which, in tempering the shaped article, causes secondary hardening. In the case where the content of Mo is too low, the alloy has insufficient quench hardenability and does not come to have a hardness required for wear-resistant members. Consequently, the content of Mo needs to be 0.1 mass% or higher. The content of Mo is preferably 0.2 mass% or higher, and more preferably 0.3 mass% or higher.
Meanwhile, in the case where the content of Mo is too high, a carbide is segregated at grain boundaries of the shaped article to reduce the toughness. Consequently, the content of Mo needs to be 4.0 mass% or less. The content of Mo is preferably 2.0 mass% or less, more preferably 1.0 mass% or less, and still more preferably 0.7 mass% or less.

1.1.2. Component Balance

A. Expression (1)

The Fe-based alloy according to the present invention needs to satisfy the following expression (1) when [M] represents a content of an element M expressed in mass% basis.

$$-3.0 < [Si] - (5[C] + 2[Mn]) < -0.5 \qquad (1)$$

The "[Si] - (5[C] + 2[Mn])" (hereinafter referred to also as "variable A") is an index to both "retained-austenite content" and "resistance to softening", which are necessary for obtaining high hardness. In order for a martensitic structure to sufficiently exhibit the hardness, the martensitic structure should be low in the content of soft retained austenite. In the case where the alloy has an increased C content and/or an increased Mn content to have a lowered martensitic-transformation initiation temperature, this results in an increase in retained-austenite content and a decrease in the hardness of the whole martensitic structure.
Furthermore, the hardness of a martensitic structure is reduced also by tempering. A martensitic structure that decreases little in hardness upon tempering is expressed with "having high resistance to softening". The higher the content of Si, the higher the resistance to softening and the more the decrease in hardness due to heat input during weld overlay can be inhibited.
In the case where the variable A is too small, the alloy has an excessive retained-austenite content and/or insufficient resistance to softening. Consequently, the variable A needs to exceed -3.0. The variable A is preferably -2.5 or larger.
Meanwhile, in the case where the variable A is too large, the content of C is insufficient and the shaped article has an insufficient hardness. Consequently, the variable A needs to be smaller than -0.5. The variable A is preferably -1.0 or smaller, and more preferably -1.5 or smaller.

B. Expression (2)

The Fe-based alloy according to the present invention preferably further satisfies the following expression (2) when [M] represents a content of an element M expressed in mass% basis.

$$0.033\,[Mo] + 0.063[W] + 0.2[V] \leq 0.4 \qquad (2)$$

The "0.033[Mo] + 0.063[W] + 0.2[V]" (hereinafter referred to also as "variable B") represents an index to the amount of Mo, W, and V carbides which are formed at grain boundaries and may cause a decrease in toughness. These carbides are formed at grain boundaries during solidification and may serve as starting points for fracture; these carbides are hence causative of a decrease in toughness. In the case where the variable B is too large, the shaped article has an increased carbide content in the grain boundaries and reduced toughness. Consequently, the variable B is preferably 0.4 or smaller. The variable B is more preferably 0.2 or smaller.

For example, high-speed tool steels such as JIS-SKH51 (JIS G 4403:2015) and JIS-SKH54 (JIS G 4403:2015) have large values of the variable B and, hence, hard carbides crystallize out in a large amount during solidification so as to cover the grain boundaries. This enhances the hardness of the overlay layer but renders a fracture prone to occur from the grain boundaries, resulting in a structure having poor toughness.

Meanwhile, in the case where the variable B is regulated to 0.4 or smaller, the crystallization of carbides is inhibited and the overlay layer can retain high toughness.

1.1.3. Minor Constituent Elements (Optional Components)

Besides containing the elements described above, the Fe-based alloy according to the present invention may further contain one or more elements such as those shown below. The kinds of the additive elements, ranges of the contents of the components, and reasons for the content ranges are as follows.

(1) 0.1 mass% ≤ V ≤ 1.0 mass%:

V is an element which causes secondary hardening in the case where the shaped article is tempered. V is also an element which yields a hard carbide to improve the wear resistance. From the standpoint of obtaining such effects, the content of V is preferably 0.1 mass% or higher. The content of V is more preferably 0.2 mass% or higher.

Meanwhile, in the case where the content of V is too high, the shaped article contains the carbide precipitated at grain boundaries thereof and hence has reduced toughness. Consequently, the content of V is preferably 1.0 mass% or less. The content of V is more preferably 0.75 mass% or less, and still more preferably 0.4 mass% or less.

(2) 0.1 mass% ≤ W ≤ 4.0 mass%:

W is an element which causes secondary hardening in the case where the shaped article is tempered. W is also an element which yields a hard carbide to improve the wear resistance. From the standpoint of obtaining such effects, the content of W is preferably 0.1 mass% or higher. The content of W is more preferably 0.6 mass% or higher.

Meanwhile, in the case where the content of W is too high, the shaped article contains the carbide precipitated at grain boundaries thereof and hence has reduced toughness. Consequently, the content of W is preferably 4.0 mass% or less. The content of W is more preferably 2.0 mass% or less.

(3) 0.001 mass% ≤ S ≤ 0.100 mass%:

S is an impurity which has unavoidably come into the alloy during the production. However, even if the content of S is reduced to an unnecessarily high degree, this not only results in no difference in effect but also is causative of an increase in production cost. Consequently, the content of S is preferably 0.001 mass% or higher. The content of S is more preferably 0.005 mass% or higher.

Meanwhile, S is also an element which forms MnS to serve to improve the machinability. However, in the case where the content of S is too high, some of the S segregates at the grain boundaries to reduce the toughness. Consequently, the content of S is preferably 0.100 mass% or less. The content of S is more preferably 0.050 mass% or less.

(4) 0.01 mass% ≤ Ni ≤ 3.0 mass%:

Ni is an element which improves the quench hardenability. Too low Ni contents may result in insufficient quench hardenability. Consequently, the content of Ni is preferably 0.01 mass% or higher.

Meanwhile, Ni is also an element which lowers the martensitic-transformation initiation temperature. Because of this, in the case where the content of Ni is too high, the shaped article has an increased volume percentage of retained austenite and has an insufficient hardness. Consequently, the content of Ni is preferably 3.0 mass% or less. The content of Ni is more preferably 1.0 mass% or less.

(5) Al ≤ 0.5 mass%:
Al may be added as a deoxidizer. However, in the case where the content of Al is too high, some of the Al reacts with O and N contained in the steel to yield an oxide and a nitride. If the oxide and the nitride are yielded in a large amount, this results in a decrease in toughness. Consequently, the content of Al is preferably 0.5 mass% or less. The content of Al is more preferably 0.1 mass% or less, and still more preferably 0.03 mass% or less.
(6) O ≤ 0.10 mass%:

O is an impurity which has unavoidably come into the alloy during the production. In the case where the content of O is too high, oxides are formed to reduce the toughness. Consequently, the content of O is preferably 0.10 mass% or less. The content of O is more preferably 0.05 mass% or less.
In the case of a powder, most of the oxygen is present in the surface of the powder because of the large surface area.

(7) N ≤ 0.10 mass%:
N is an impurity which has unavoidably come into the alloy during the production. In the case where the content of N is too high, nitrides are formed to reduce the toughness. Consequently, the content of N is preferably 0.10 mass% or less. The content of N is more preferably 0.05 mass% or less.

1.1.4. Unavoidable Impurities

There are cases where the components shown below are contained in the Fe-based alloy according to the present invention in the amounts shown below. In such cases, these components are regarded as unavoidable impurities in the present invention.
Co ≤ 0.05 mass%, Cu ≤ 0.50 mass%, Sn ≤ 0.05 mass%, Nb ≤ 0.05 mass%, Ta ≤ 0.05 mass%, Ti ≤ 0.05 mass%, Zr ≤ 0.05 mass%, B ≤ 0.01 mass%, Ca ≤ 0.01 mass%, Se ≤ 0.03 mass%, Te ≤ 0.01 mass%, Bi ≤ 0.01 mass%, Pb ≤ 0.05 mass%, Mg ≤ 0.02 mass%, REM (Rare Earth Metal) ≤ 0.01 mass%.

1.2. Properties: Hardness of Additive Manufacturing Article

The term "Vickers hardness of an additive manufacturing article" means a Vickers hardness determined by (a) producing a shaped article having a layer deposition height of 2 mm or larger by using a direct energy deposition (DED) method and (b) examining the additive manufacturing article for Vickers hardness in accordance with JIS Z 2244:2020 in a position located at a distance of 1 mm from the upper surface using a cut surface obtained by cutting the additive manufacturing article in a direction parallel with the direction of layer deposition.
In producing the shaped article, conditions for the shaping may be appropriately regulated so that the cut surface of the shaped article has no crack or void having an overall length of 1 mm or larger.
When the Fe-based alloy according to the present invention is used to conduct additive manufacturing, the Fe-based alloy having an optimized composition gives an additive manufacturing article having a Vickers hardness of 650 HV or higher. In the case where the composition of the Fe-based alloy is further optimized, this alloy gives an additive manufacturing article having a Vickers hardness of 680 HV or higher.

1.3. Shape

In the present invention, the shape of the Fe-based alloy is not particularly limited. Examples of the shape of the Fe-based alloy include a mass, a rod, a tube, a filament, and a powder. In particular, powders are suitable for use as raw materials for melting-solidification shaping.

2. Metal Powder

The metal powder according to the present invention includes a metal powder equivalent in average composition to the Fe-based alloy according to the present invention. The metal powder preferably has an average particle diameter of 10 μm or more and 300 μm or less.

2.1. Components

The wording "an average composition that is equivalent to the Fe-based alloy" means: (a) the metal powder is constituted of a group of metal particles of one kind which have the same composition and the composition of each particle is within the range described above; (b) the metal powder is constituted of a mixture of metal particles of two or more kinds differing in composition and the metal particles each have component contents within the ranges described above; or (c) the metal powder is constituted of a mixture of metal particles of two or more kinds differing in composition, in which one or two or more kinds of metal particles have component contents outside the ranges described above but the metal powder as a whole has an average composition having component contents within the ranges described above.

In the case where the metal powder is constituted of a mixture of metal particles of two or more kinds differing in composition, the individual metal particles may be pure-metal particles each constituting of a single metallic element or may be alloy particles each including two or more metallic elements. In the case where the metal powder is constituted of a mixture, an average composition thereof is obtained, for example, by extracting about 10 g of a sample from the mixture and analyzing the sample by a method such as fluorescent X-ray analysis, a combustion infrared absorption method, or plasma emission spectrometry.

Details of the composition (average composition) of the metal powder are the same as in the Fe-based alloy described above, and explanations thereon are hence omitted.

2.2. Average Particle Diameter

The term "average particle diameter" means number frequency $D_{50}$ ($\mu$m), that is, the 50% number-cumulative particle diameter (median diameter) of a powder. Examples of methods for determining $D_{50}$ include (a) a method in which a particle distribution analyzer based on the laser diffraction/scattering method is used, (b) a method in which a particle image analyzer is used, and (c) a method in which a Coulter counter is used.

The "$D_{50}$" as used in the present invention means median diameter determined with a particle distribution analyzer based on the laser diffraction/scattering method.

The average particle diameter and particle size distribution of the metal powder can be controlled by regulating conditions for producing the metal powder and conditions for classification for the metal powder.

In melting-solidification shaping using a metal powder, there are cases where a nozzle is used to feed the metal powder into a shaping zone. In such cases, in the case where the metal powder has too small average particle diameter, this metal powder has reduced flowability and may be difficult to be fed stably into the shaping zone. Consequently, the average particle diameter of the metal powder is preferably 10 $\mu$m or larger. The average particle diameter thereof is more preferably 50 $\mu$m or larger, and still more preferably 80 $\mu$m or larger.

Meanwhile, in the case where the metal powder has too large average particle diameter, there are cases where the nozzle is clogged by particles having large particle diameters, making it impossible to stably feed the powder into the shaping zone. Consequently, the average particle diameter of the metal powder is preferably 300 $\mu$m or less. The average particle diameter thereof is more preferably 200 $\mu$m or less, and still more preferably 150 $\mu$m or less.

2.3. Shape of Particles

The shape of the individual metal particles included in the metal powder is not particularly limited. The metal particles may be spherical particles or particles of irregular shapes. From the standpoint of obtaining high flowability, the metal particles are preferably spherical particles.

2.4. Surface Coating

The metal particles may be ones in which the surface thereof is coated with nanoparticles. The term "nanoparticles" means particles of an inorganic compound which each have a diameter of 1 nm or more and 100 nm or less. The nanoparticles may be optionally added to the metal powder in order to coat the metal particles. In the present application, the composition of the metal powder described above means the composition excluding the nanoparticles.

There are cases where coating the surface of metal particles with nanoparticles of some kind can inhibit the metal particles from agglomerating. Examples of nanoparticles which can serve to inhibit the agglomeration of metal particles include metal oxides such as silica ($SiO_2$), alumina ($Al_2O_3$), manganese oxide (MnO), iron oxide ($Fe_2O_3$), calcium oxide (CaO), and magnesium oxide (MgO).

In the case of coating the surface of metal particles with nanoparticles, too small amount of the nanoparticles used for the coating may make it impossible to sufficiently inhibit the agglomeration of the metal particles. Consequently, the content of the nanoparticles is preferably 0.005 mass% or higher in the metal powder.

Meanwhile, in the case where the amount of the nanoparticles used for coating is too large, the nanoparticles may serve as inclusion particles, in performing melting-solidification shaping, to reduce the strength and/or the toughness of the shaped article. Consequently, the content of the nanoparticles is preferably 0.05 mass% or less in the metal powder.

2.5. Uses

The metal powder according to the present invention can be used as a powdery raw material for melting-solidification shaping.

The term "melting-solidification shaping" means a method in which a metal powder is melted by using any of various heat sources and the molten metal powder is solidified and deposited to thereby form the whole or a portion of a shaped article.

The expression "form the whole of a shaped article" means that the whole of a shaped article is formed only by melting, solidifying, and depositing of a metal powder.

The expression "form a portion of a shaped article" means that on a surface of a base material constituting a portion of a shaped article, a new layer for constituting another portion of the shaped article is superposed by melting, solidifying, and depositing a metal powder (for example, repair of a mold).

Representative examples of methods for the melting-solidification shaping include (a) a direct energy deposition (DED) method, (b) a powder bed melting method, and (c) a plasma overlay welding method.

Of these methods, the "direct energy deposition (DED) method" is a method in which a metal powder that is being continuously fed is irradiated with a laser or electron beam and the resultant molten metal is selectively deposited on a base material, e.g., an existing member or a substrate. In the DED method, a metal layer can be repeatedly deposited and an overlay having any of various shapes including a linear shape, a wall shape, and a massive shape can be formed. By using a device employing a laser as a heat source, the volume of a melt to be deposited can be reduced and a decrease in quality due to component mixing, which occurs at the interface between the melt to be deposited and the base material, can be diminished. Because of this, various materials including Fe-based alloys, Ni-based alloys, and Co-based alloys can be used as the base material.

The "powder bed melting method" is a method in which data of slices each of tens of micrometers are produced on the basis of three-dimensional shape data (e.g., STL data) produced with a 3D-CAD or the like, and a powder bed is selectively irradiated with a laser while scanning the laser using the obtained slice data, thereby forming a sintered layer and the obtained sintered layers are stacked with each other.

The "plasma overlay welding method" is a method in which a plasma arc is generated between an electrode and a base material, and a metal powder is introduced thereinto and melted to thereby pile up the metal on the surface of the base material.

3. Methods for Producing the Metal Powder

The metal powder according to the present invention can be produced by using a method such as a gas atomization method, a water atomization method, a plasma atomization method, a plasma/rotating electrode method, or a centrifugal atomization method. Use may be also made of a combination of methods, in which a powder obtained by any of these methods is subjected to a spheroidizing treatment with a reducing thermal plasma.

Of these methods, the "gas atomization method" is a method in which raw materials for an alloy are melted with, for example, an induction-melting furnace and while the melt is being caused to fall from the bottom of a tundish, a high-pressure gas is blown against the melt to pulverize and solidify the melt, thereby obtaining a metal powder. As the high-pressure gas, use can be made of an inert gas such as nitrogen gas, argon gas, or helium gas. Gas atomization conditions are not particularly limited, and optimal conditions can be selected in accordance with purposes.

It is preferable that after a metal powder has been produced by using the gas atomization method, the metal powder is classified to regulate the average particle diameter and the particle size distribution. Examples of means for the classification include a dry cyclone, a wet cyclone, dry sieves, and ultrasonic sieves. In the case where the metal powder having a regulated average particle diameter and a regulated particle size distribution is applied to melting-solidification shaping, a dense shaped article can be obtained.

Furthermore, component regulation may be conducted according to need by mixing two or more kinds of metal powders differing in composition.

4. Effects

The Fe-based alloy according to the present invention has optimized contents of alloying elements, in particular, Si, C, and Mn, and hence gives overlay layer having a relatively low content of retained-austenite. In addition, since the contents of elements which cause secondary hardening, such as Mo and V, therein have been optimized, the overlay layer can be inhibited from suffering a decrease in toughness due to the precipitation of coarse carbides. Furthermore, since the content of Si therein has been optimized, the Fe-based alloy is highly resistant to temper softening. Consequently, in the case where the Fe-based alloy according to the present invention is applied to melting-solidification shaping, it is possible to obtain an overlay layer or additive manufacturing article which has high wear resistance and high toughness.

## EXAMPLES

Examples 1 to 9 and Comparative Examples 1 to 7

### 1. Production of Samples

#### 1.1. Production of Metal Powders

Using a gas atomization method, 16 kinds of metal powders shown in Table 1 were produced. There are cases where elements not shown in Table 1 were contained in amounts within the ranges specified above as impurities.

Table 1

| | C | Si | Mn | Ni | Cr | Mo | w | V | N | Others |
|---|---|---|---|---|---|---|---|---|---|---|
| Comparative Example 1 | 1.48 | 0.3 | 0.4 | <0.01 | 11.6 | 0.9 | <0.01 | 0.3 | 0.01 | |
| Comparative Example 2 | 1.00 | 1.1 | 0.4 | 0.1 | 7.6 | 2.1 | 0.02 | 0.3 | 0.02 | |
| Comparative Example 3 | 0.85 | 0.4 | 0.3 | 0.02 | 4.2 | 5.1 | 5.9 | 1.9 | <0.01 | |
| Comparative Example 4 | 1.30 | 0.3 | 0.3 | <0.01 | 3.9 | 4.5 | 5.5 | 4.1 | <0.01 | |
| Comparative Example 5 | 0.37 | 0.6 | 0.5 | <0.01 | 12.6 | 0.1 | <0.01 | <0.01 | 0.015 | |
| Comparative Example 6 | 0.36 | 0.95 | 0.4 | <0.01 | 5.3 | 1.1 | <0.01 | 0.9 | 0.01 | |
| Comparative Example 7 | 0.64 | 2.1 | 1.1 | 0.05 | 6.2 | 0.9 | <0.01 | 0.1 | 0.01 | |
| Example 1 | 0.59 | 2.1 | 0.42 | 0.1 | 5.9 | 0.5 | <0.01 | 0.05 | 0.02 | O: 0.02 |
| Example 2 | 0.54 | 1.9 | 0.5 | 0.05 | 6.0 | 0.5 | <0.01 | 0.02 | 0.03 | S: 0.02 |
| Example 3 | 0.60 | 1.5 | 0.4 | <0.01 | 3.1 | 0.1 | <0.01 | <0.01 | 0.01 | S: 0.03 |
| Example 4 | 0.51 | 2.0 | 1 | <0.01 | 7.9 | 0.1 | <0.01 | 0.01 | 0.05 | |
| Example 5 | 0.85 | 1.9 | 0.3 | <0.01 | 3.0 | 2.1 | <0.01 | 0.7 | <0.01 | |
| Example 6 | 0.80 | 2.8 | 0.3 | <0.01 | 3.2 | 3.5 | <0.01 | 0.9 | <0.01 | |
| Example 7 | 0.65 | 0.5 | 0.1 | <0.01 | 5.1 | 2.1 | 3.4 | 0.8 | <0.01 | |
| Example 8 | 0.52 | 0.7 | 0.2 | 2.1 | 4.5 | 0.2 | <0.01 | <0.01 | <0.01 | Al: 0.3 |
| Example 9 | 0.56 | 1.7 | 0.4 | 0.01 | 5.7 | 0.3 | <0.01 | <0.01 | 0.02 | O: 0.03 |

#### 1.2. Production of Shaped Articles by Overlay Welding

Shaped articles were produced by using the produced metal powders and a DED-mode laser device for metal additive manufacturing (3D metal printer). In FIG. 1 is illustrated a schematic view of the 3D metal printer. The 3D metal printer 10 illustrated in FIG. 1 includes a powder feed nozzle 12, a laser oscillator (not illustrated), a powder feeder (not illustrated), and a shielding-gas feeder (not illustrated). The powder feed nozzle 12 has a double-pipe structure so that a metal powder 14 and a carrier gas (shielding gas) can be fed to the space between the outer pipe 12a and the inner pipe 12b. A condenser lens (not illustrated) has been disposed in the inside of the inner pipe 12b, through which laser light 13 passes. Furthermore, the powder feed nozzle 12 has been configured so that a shielding gas for preventing the oxidation of the metal powder 14 can be fed to the inside of the inner pipe 12b.

This 3D metal printer 10 is used to conduct overlay welding specifically in the following manner. First, the powder feed nozzle 12 is disposed near the upper surface of a base material 20. Next, the metal powder 14 and the carrier gas are fed to the gap between the outer pipe 12a and the inner pipe 12b, and the shielding gas is fed to the inside of the inner pipe 12b. While the powder feed nozzle 12 is kept in this state, laser light 13 is caused to strike on the condenser lens (not illustrated), upon which in the vicinity of the focal point of the laser light 13, the metal powder 14 and a surface-layer portion of the base material 20 are melted and integrated with each other. Furthermore, the powder feed nozzle 12 is moved in a horizontal direction (e.g. in a direction X as indicated in FIG. 1) and, as a result, the melt of the melted and integrated metals solidifies to become an overlay layer 22.

In Examples 1 to 9 and Comparative Examples 1 to 7, a flat plate (50 mm × 70 mm × 10 mm) of JIS-SKD61 (JIS G 4404:2015) was used as the base material 20. Conditions for the shaping were as follows. The shaping conditions were appropriately regulated so as to result in a density of 98% or higher.

Laser output: 1,500 W to 2,000 W
Powder flow rate: 5 g/min to 10 g/min
Traveling speed: 100 mm/min to 1,000 mm/min
Dimensions of shaped article: 5 mm to 10 mm (height) × 10 mm to 12 mm (width) × 60 mm to 70 mm (length)

2. Test Methods

2.1. Hardness

The shaped article including the base material and the overlay layer were cut in a thickness of 5 mm, and an unnecessary portion of the base material that was distant from the overlay layer was removed. Next, the shaped article from which the base material had been removed was embedded in a resin. This sample was polished with a polishing paper, a diamond grindstone, and an alumina buff until the metal surface became a mirror surface.

After the polishing, a Vickers hardness tester was used to measure the Vickers hardness (JIS Z 2244:2020) in a position located at a distance of 1 mm from the upper surface of the overlay layer. The load was 300 gf, and ten portions were thus examined per a sample to calculate an average value thereof.

2.2. Percentage of Content of Retained Austenite Phase in Overlay Layer

The shaped article including the base material and the overlay layer were cut in a thickness of 5 mm, and an unnecessary portion of the base material that was distant from the overlay layer was removed. Next, the shaped article from which the base material had been removed was embedded in a resin. This sample was polished with a polishing paper and abrasive diamond grains until the metal surface became a mirror surface.

This sample was subjected to electrolytic polishing using an aqueous solution of phosphoric acid to remove a layer having a thickness of 0.05 μm. An overlay portion of the electrolytically polished sample was examined with an X-ray diffractometer (XRD) to determine an average proportion (volume percentage (%)) of retained austenite from a ratio between peak intensities for martensitic structure and austenitic structure.

2.3. Absorbed Energy

A rectangular bar of 3 mm × 5 mm × 30 mm was cut out of a test piece obtained by the shaping and was evaluated for toughness through a three-point bending test. The toughness was evaluated in terms of "absorbed energy", which was the integral of load and strain during the range of from a point where the strain was zero to a point where the load was maximum. That the absorbed energy is large means that a large amount of energy is required for the material to be fractured, and such a material can be regarded as having high toughness.

3. Results

The results are shown in Table 2. In FIG. 2 is shown a relationship between [Si] - (5[C] + 2[Mn]) and the volume percentage of retained austenite. In FIG. 3 is shown a relationship between [Si] - (5[C] + 2[Mn]) and the hardness of overlay layer. The following can be seen from Table 2 and FIGs. 2 and 3.

(1) In Comparative Examples 1, 2, and 7, the overlay layer had low hardness. This is thought to be because the value of the variable A was -3 or smaller and the content of retained austenite was high. In Comparative Examples 1 and 2, the too high content of C is thought to have been especially causative of the increase in retained-austenite content. In Comparative Example 7, the too high content of Mn is thought to have been especially causative of the increase in retained-austenite content. (2) In Comparative Examples 3 and 4, the overlay layer, although high in hardness, had the value of the variable A of -3 or smaller and the high content of retained austenite. Furthermore, Comparative Examples 3 and 4 had reduced toughness. This is thought to be because a carbide precipitation had occurred in a large amount.

(3) Comparative Examples 5 and 6, although having the value of the variable A of -3 or larger, had reduced hardness. This is thought to be because the content of C had been insufficient and this resulted in the insufficient hardness of the martensitic structure. (4) In each of Examples 1 to 9, the overlay layer had a hardness exceeding 650 HV. Furthermore, the overlay layer had a retained-austenite content of 30% or less. This is thought to be because the value of the variable A was in the proper range.

(5) In each of Examples 1 to 6, 8, and 9, the absorbed energy was 0.4 J or larger. Meanwhile, in Example 7 and Comparative Examples 3 and 4, the overlay layer had an absorbed energy of less than 0.4 J and had low toughness. This is thought to be because the value of the variable B was 0.4 or larger and carbides had been formed in a large amount at the grain boundary and served as a starting point for fracture.

Table 2

| | Variable A | Variable B | Hardness (HV) | Retained γ (%) | Absorbed energy (J) |
|---|---|---|---|---|---|
| Comparative Example 1 | -7.90 | 0.09 | 386 | 80.1 | 9.47 |
| Comparative Example 2 | -4.70 | 0.13 | 392 | 53.9 | 8.48 |
| Comparative Example 3 | -4.45 | 0.92 | 735 | 34.1 | 0.28 |
| Comparative Example 4 | -6.80 | 1.32 | 694 | 55.7 | 0.14 |
| Comparative Example 5 | -2.25 | 0.00 | 588 | 19.5 | 1.15 |
| Comparative Example 6 | -1.65 | 0.22 | 595 | 9.3 | 0.90 |
| Comparative Example 7 | -3.30 | 0.05 | 619 | 30.7 | 0.52 |
| Example 1 | -1.69 | 0.03 | 721 | 21.6 | 0.48 |
| Example 2 | -1.80 | 0.02 | 707 | 19.6 | 0.53 |
| Example 3 | -2.30 | 0.00 | 709 | 17.3 | 0.57 |
| Example 4 | -2.55 | 0.01 | 703 | 23.6 | 0.58 |
| Example 5 | -2.95 | 0.21 | 683 | 29.3 | 0.49 |
| Example 6 | -1.80 | 0.30 | 723 | 27.0 | 0.63 |
| Example 7 | -2.95 | 0.44 | 737 | 16.1 | 0.32 |
| Example 8 | -2.30 | 0.01 | 676 | 12.7 | 0.46 |
| Example 9 | -1.90 | 0.01 | 706 | 20.1 | 0.58 |

The present invention has been described in detail with reference to specific embodiments thereof. However, the invention is not limited to the embodiments and can be variously modified without departing from the spirit thereof.

The present application is based on Japanese Patent Application No. 2021-045453 filed on March 19, 2021, and the contents thereof are incorporated herein by reference.

The metal powder according to the present invention can be used as a powdery raw material for producing or repairing portions or parts required to have wear resistance, such as molds and sliding members, by additive manufacturing or overlay welding.

Furthermore, the Fe-based alloy of the present invention, owing to the properties thereof, is also suitable for use as a wire for welding or additive manufacturing.

## Claims

**1.** An Fe-based alloy having a composition consisting of:

0.5 mass% ≤ C ≤ 0.9 mass%;
0.5 mass% ≤ Si ≤ 3.0 mass%;
0.1 mass% ≤ Mn ≤ 1.0 mass%;
3.0 mass% ≤ Cr ≤ 8.0 mass%; and
0.1 mass% ≤ Mo ≤ 4.0 mass%, and

optionally,

$V \leq 1.0$ mass%;
$W \leq 4.0$ mass%;
$S \leq 0.100$ mass%;
$Ni \leq 3.0$ mass%;
$Al \leq 0.5$ mass%;
$O \leq 0.10$ mass%; and
$N \leq 0.10$ mass%,

with the balance being Fe and unavoidable impurities,
and satisfying the following expression (1) when [M] represents a content of an element M expressed in mass% basis,

$$-3.0 < [Si] - (5[C] + 2[Mn]) < -0.5 \qquad (1).$$

2. The Fe-based alloy according to claim 1, wherein the composition further comprises at least one selected from the group consisting of 0.1 mass% $\leq V \leq$ 1.0 mass% and 0.1 mass% $\leq W \leq$ 4.0 mass%.

3. The Fe-based alloy according to claim 1 or 2, wherein the composition further comprises 0.001 mass% $\leq S \leq$ 0.100 mass%.

4. The Fe-based alloy according to any one of claims 1 to 3, wherein the composition further comprises 0.01 mass% $\leq Ni \leq$ 3.0 mass%.

5. The Fe-based alloy according to any one of claims 1 to 4, wherein the composition further satisfies the following expression (2) when [M] represents a content of an element M expressed in mass% basis,

$$0.033[Mo] + 0.063[W] + 0.2[V] \leq 0.4 \qquad (2).$$

6. A metal powder having an average composition that is equivalent to the Fe-based alloy according to any one of claims 1 to 5.

7. The metal powder according to claim 6, which gives an additive manufacturing article having a Vickers hardness of 650 HV or higher.

8. Use of the metal powder according to claim 6 or 7 for additive manufacturing.

FIG. 1

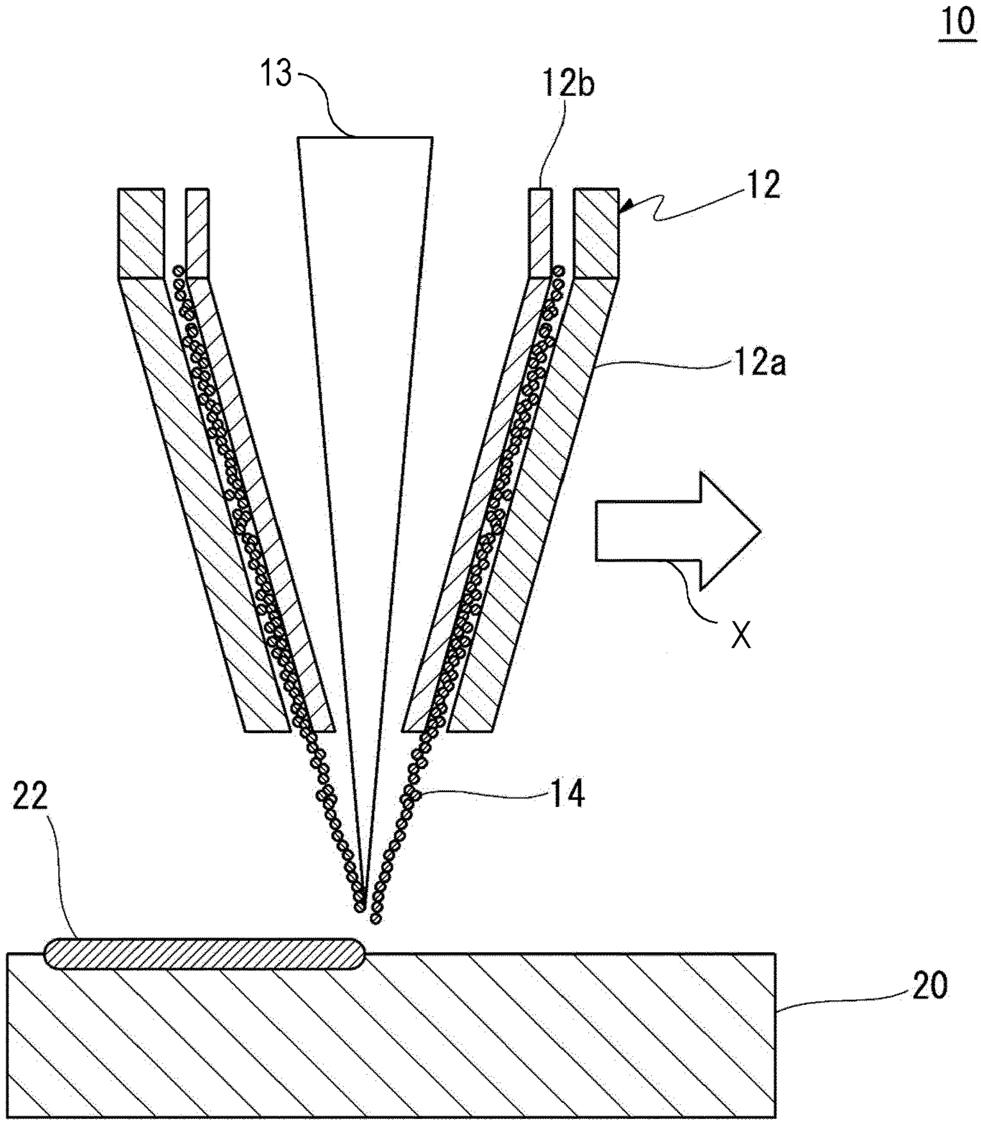

FIG. 2

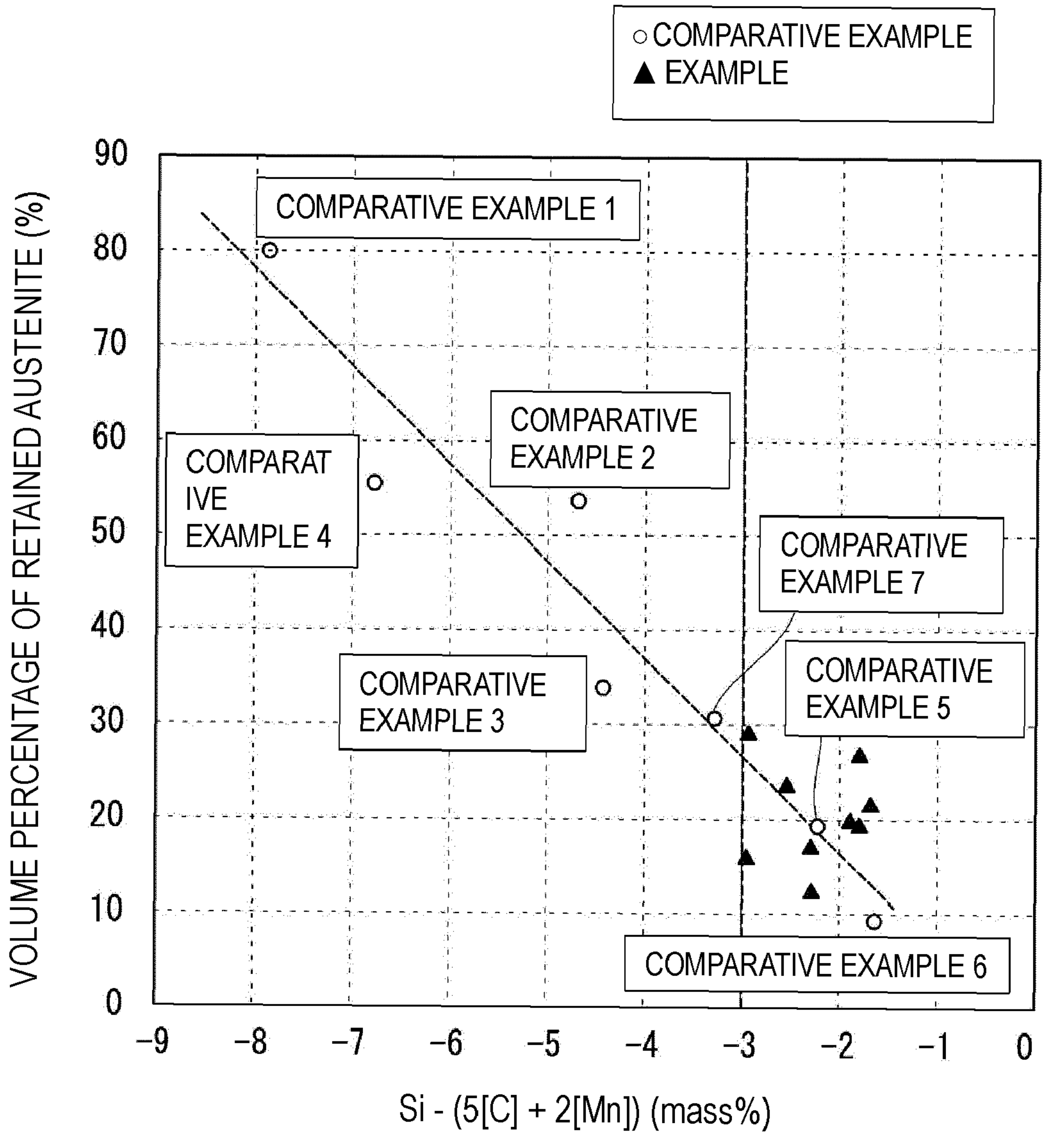
○ COMPARATIVE EXAMPLE
▲ EXAMPLE
VOLUME PERCENTAGE OF RETAINED AUSTENITE (%)
90
80
70
60
50
40
30
20
10
0
COMPARATIVE EXAMPLE 1
COMPARATIVE EXAMPLE 2
COMPARAT IVE EXAMPLE 4
COMPARATIVE EXAMPLE 7
COMPARATIVE EXAMPLE 5
COMPARATIVE EXAMPLE 3
COMPARATIVE EXAMPLE 6
−9
−8
−7
−6
−5
−4
−3
−2
−1
0
Si - (5[C] + 2[Mn]) (mass%)

FIG. 3

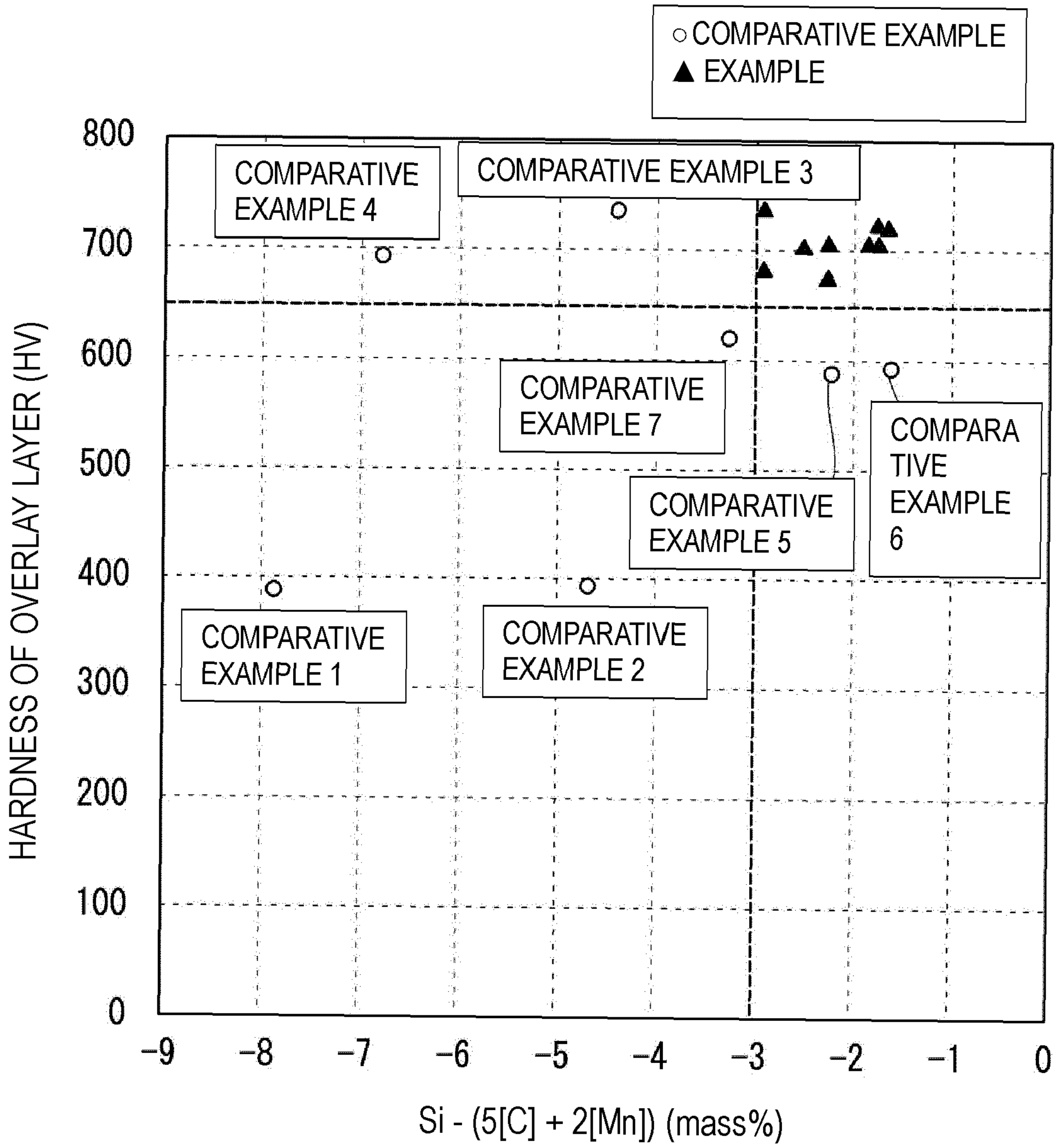
○ COMPARATIVE EXAMPLE
▲ EXAMPLE
COMPARATIVE EXAMPLE 4
COMPARATIVE EXAMPLE 3
COMPARATIVE EXAMPLE 7
COMPARATIVE EXAMPLE 5
COMPARATIVE EXAMPLE 6
COMPARATIVE EXAMPLE 1
COMPARATIVE EXAMPLE 2
HARDNESS OF OVERLAY LAYER (HV)
800
700
600
500
400
300
200
100
0
−9
−8
−7
−6
−5
−4
−3
−2
−1
0
Si - (5[C] + 2[Mn]) (mass%)

Europäisches Patentamt
European Patent Office
Office européen des brevets

# EUROPEAN SEARCH REPORT

Application Number
EP 22 16 3032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 055 798 A1 (DAIDO STEEL CO LTD [JP]) 6 May 2009 (2009-05-06) * paragraphs [0001], [0019] - [0021], [0037], [0040], [0064] - [0089] * * table 1 * ----- | 1-8 | INV. B22F10/25 B33Y70/00 C22C33/02 C22C38/02 C22C38/04 C22C38/22 C22C38/24 C22C38/34 C22C38/40 C22C38/44 |
| X | EP 1 511 872 A1 (UDDEHOLM TOOLING AB [SE]) 9 March 2005 (2005-03-09) * paragraphs [0001], [0002], [0008] - [0017], [0022] * * table 1 * ----- | 1-8 | |
| X | EP 2 679 697 A1 (HITACHI METALS LTD [JP]) 1 January 2014 (2014-01-01) * paragraphs [0001], [0009] - [0012], [0017] - [0030] * * table 1 * ----- | 1-8 | |
| X | US 2010/135844 A1 (MURAKAMI SHOGO [JP] ET AL) 3 June 2010 (2010-06-03) * paragraphs [0001], [0012] - [0030], [0043] - [0079] * * table 1 * ----- | 1-8 | TECHNICAL FIELDS SEARCHED (IPC) |
| A | US 2021/040591 A1 (FUKUZAWA NORIHIDE [JP] ET AL) 11 February 2021 (2021-02-11) * the whole document * ----- | 1-8 | B22F C22C B33Y |
| A | EP 3 733 326 A1 (DEUTSCHE EDELSTAHLWERKE SPECIALTY STEEL GMBH & CO KG [DE]) 4 November 2020 (2020-11-04) * the whole document * ----- | 1-8 | |

The present search report has been drawn up for all claims

1

| Place of search | Date of completion of the search | Examiner |
|---|---|---|
| The Hague | 2 August 2022 | Stocker, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 16 3032

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2022

| Patent document cited in search report | | Publication date | Patent family member(s) | | | Publication date |
|---|---|---|---|---|---|---|
| EP 2055798 | A1 | 06-05-2009 | EP | 2055798 | A1 | 06-05-2009 |
| | | | KR | 20090045093 | A | 07-05-2009 |
| | | | US | 2009107587 | A1 | 30-04-2009 |
| EP 1511872 | A1 | 09-03-2005 | AU | 2003224591 | A1 | 31-12-2003 |
| | | | BR | 0311756 | A | 08-03-2005 |
| | | | CA | 2488790 | A1 | 24-12-2003 |
| | | | CN | 1671876 | A | 21-09-2005 |
| | | | EP | 1511872 | A1 | 09-03-2005 |
| | | | ES | 2385336 | T3 | 23-07-2012 |
| | | | JP | 4624783 | B2 | 02-02-2011 |
| | | | JP | 2006504868 | A | 09-02-2006 |
| | | | KR | 20050007598 | A | 19-01-2005 |
| | | | RU | 2324760 | C2 | 20-05-2008 |
| | | | SI | 1511872 | T1 | 28-09-2012 |
| | | | TW | I293990 | B | 01-03-2008 |
| | | | US | 2005123434 | A1 | 09-06-2005 |
| | | | WO | 03106727 | A1 | 24-12-2003 |
| EP 2679697 | A1 | 01-01-2014 | CN | 103403207 | A | 20-11-2013 |
| | | | EP | 2679697 | A1 | 01-01-2014 |
| | | | JP | 5843173 | B2 | 13-01-2016 |
| | | | JP | WO2012115025 | A1 | 07-07-2014 |
| | | | TW | 201250010 | A | 16-12-2012 |
| | | | WO | 2012115025 | A1 | 30-08-2012 |
| US 2010135844 | A1 | 03-06-2010 | CN | 101668874 | A | 10-03-2010 |
| | | | JP | 5143531 | B2 | 13-02-2013 |
| | | | JP | 2009120886 | A | 04-06-2009 |
| | | | TW | 200936785 | A | 01-09-2009 |
| | | | US | 2010135844 | A1 | 03-06-2010 |
| | | | WO | 2009063690 | A1 | 22-05-2009 |
| US 2021040591 | A1 | 11-02-2021 | CN | 111954725 | A | 17-11-2020 |
| | | | EP | 3795707 | A1 | 24-03-2021 |
| | | | JP | 6974607 | B2 | 01-12-2021 |
| | | | JP | WO2019220917 | A1 | 25-02-2021 |
| | | | SG | 11202006979T | A | 28-08-2020 |
| | | | US | 2021040591 | A1 | 11-02-2021 |
| | | | WO | 2019220917 | A1 | 21-11-2019 |
| EP 3733326 | A1 | 04-11-2020 | EP | 3733326 | A1 | 04-11-2020 |
| | | | WO | 2020221689 | A1 | 05-11-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004503386 T
- JP 3462742 B
- JP 2021045453 A